# EUROPÄISCHE PATENTSCHRIFT

(11) **EP 2 021 922 B1**
(45) Veröffentlichungstag und Bekanntmachung des Hinweises auf die Patenterteilung: **28.06.2017**
(21) Anmeldenummer: 07725488.6
(22) Anmeldetag: 23.05.2007
(51) Int. Cl.: G06F 11/00

(54) **VERFAHREN UND VORRICHTUNG FÜR EIN FEHLERTOLERANZMANAGEMENT EINER SOFTWAREKOMPONENTE**
METHOD AND DEVICE FOR THE FAULT TOLERANCE MANAGEMENT OF A SOFTWARE COMPONENT
PROCÉDÉ ET DISPOSITIF DE GESTION DE TOLÉRANCE AUX PANNES D'UN COMPOSANT LOGICIEL

(30) Priorität: 23.05.2006 DE 102006024233
(43) Veröffentlichungstag der Anmeldung: 11.02.2009
(73) Patentinhaber: Fujitsu Limited, Kawasaki-shi Kanagawa 211-8588 (JP)
(72) Erfinder: KÄFER, Gerald, 81739 München (DE); KÖNIG, Christoph, 85521 Ottobrunn (DE); SCHMID, Reiner, 80538 München (DE)
(74) Vertreter: Epping - Hermann - Fischer
(86) Internationale Anmeldenummer: PCT/EP2007/004588
(87) Internationale Veröffentlichungsnummer: WO 2007/134856

(56) Entgegenhaltungen:
- US-A- 4 769 761
- US-A- 5 208 814
- US-A- 5 751 964
- US-A1- 2003 023 406
- Abraham Silberschatz, Peter Baer Galvin, Greg Gagne: "Operating System Concepts", 13 February 2009 (2009-02-13), John Wiley & Sons; Eighth & Wiley Student edition ISBN: 0470233990 pages 1-972,

## Beschreibung

Die vorliegende Erfindung betrifft ein Verfahren für ein Fehlertoleranzmanagement einer Softwarekomponente und eine Vorrichtung zur Durchführung des erfindungsgemäßen Verfahrens.

Moderne Rechnersysteme setzen sich aus einer Vielzahl von verschiedenen Hardwarekomponenten und Softwarekomponenten zusammen, die in komplexer Weise miteinander wechselwirken. Einzelne Komponenten verrichten ihre Aufgabe unter Nutzung von Diensten, die von anderen Hardwarekomponenten oder Softwarekomponenten angeboten werden. Prominente Beispiele hierfür sind Betriebssysteme, die auf Treiber für die Hardwarekomponenten zugreifen, oder webbasierte Dienste, die kombiniert auf einem lokalen und einem entfernten Rechner ablaufen.

Für solche Anwendungen ist es erforderlich, dass deren Integration unabhängig von den verwendeten Hardwarekomponenten und anderen Softwarekomponenten ist. Die Administration solcher Systeme ist daher sehr aufwändig, da bei kleinen Änderungen bereits unerwünschte Wechselwirkungen zwischen einzelnen Komponenten auftreten können. Eine Abschätzung des Risikos, sowohl der Wahrscheinlichkeit als auch des Umfangs, beim Ändern einzelner Komponenten, zum Beispiel durch ein Update, sind in der Regel im Vorhinein nicht möglich. Typischerweise erkennen Administratoren erst nach einer längeren trial-and-error Phase die auftretenden Störungen und die zugehörigen Fehlerquellen.

Aus der US 5,208,814 ist ein Verfahren und ein System zum Betreiben eines elektronischen Reprografiedrucksystems mit einen Druckauftragszähler bekannt. Durch Vergleichen einer Anzahl der Abstürze des Reprografiedrucksystems während der Ausführung eines bestimmten Druckauftrags mit einem vorgegebenen Schwellwert, wird ermittelt, ob der Druckauftrag das System negativ beeinträchtigt.

Aus der US 5,751,964 ist ein System und ein Verfahren zur automatischen Bestimmung von Schwellwerten in einem Netzwerk-Managementsystem bekannt. Durch Sammeln historischer Daten wird ein Mittelwert und eine Standardabweichung einer Zählervariable bestimmt. Liegen weitere Werte außerhalb des bestimmten normalen Intervalls, wird erkannt, dass ein Fehler in dem Netzwerk vorliegt.

Das erfindungsgemäße Verfahren mit den Merkmalen des Patentanspruchs 1 ermittelt für eine Softwarekomponente, die in einer bestimmten Ausführungsumgebung ausgeführt wird, deren Toleranz gegenüber auftretenden Änderungen und auftretenden Fehlern und beschreibt diese mit speziellen Fehlertoleranzwerten. Die so ermittelten Fehlertoleranzwerte geben einem Administrator wertvolle Hinweise darauf, inwieweit Änderungen an der Softwarekomponente und/oder der Ausführungsumgebung Störungen verursachen werden. Somit kann der Administrator gegebenenfalls besonders störanfällige Softwarekomponenten isolieren und gesondert behandeln.

Das erfindungsgemäße Verfahren für ein Fehlertoleranzmanagement einer Softwarekomponente umfassend einen Programmcode sieht folgende Schritte vor:
a) Ausführen einer Mehrzahl von Instanzen derselben Softwarekomponente in unterschiedlichen Ausführungsumgebungen, in welchen die Instanzen mit unterschiedlichen Softwarekomponenten und/oder unterschiedlicher Hardware interagieren, wobei jede Softwarekomponente ein lokales Störanfälligkeitsregister und ein globales Störanfälligkeitsregister zugeordnet ist;
b) Erfassen einer Störung einer ersten Instanz der Softwarekomponente;
c1) Aktualisieren des lokalen Störanfälligkeitsregisters der ersten Instanz basierend auf der erfassten Störung und dem Inhalt des lokalen Störanfälligkeitsregisters der ersten Instanz;
c2) Aktualisieren des globalen Störanfälligkeitsregisters jeder Instanz basierend auf der erfassten Störung und dem Inhalt des globalen Störanfälligkeitsregisters jeder Instanz;
d1) Bestimmen eines Unterschieds des jeweiligen lokalen Störanfälligkeitsregisters zu dem jeweiligen globalen Störanfälligkeitsregister; und
d2) Bestimmen eines Fehlertoleranzwertes der Softwarekomponente in der jeweiligen Ausführungsumgebung basierend auf dem bestimmten Unterschied.

Eine Instanz bezeichnet eine in den Arbeitsspeicher geladene Softwarekomponente. Der Arbeitsspeicherinhalt einer Softwarekomponenteninstanz besteht aus für alle Instanzen gleichen Speicherinhalten, welche den Programmcode enthalten, und aus für alle Instanzen spezifischen Bereichen, welche die Laufzeitdaten enthalten. Eine Softwarekomponente wird zu einer weiteren als identisch angesehen, wenn sie auf dem gleichen Quellcode (Programmcode) beruht. Instanzen identischer Softwarekomponenten werden im Rahmen dieser Beschreibung als Instanzen derselben Softwarekomponente angesehen.

Eine Idee der vorliegenden Erfindung ist jeder Instanz einer Softwarekomponente zwei Register zuzuordnen. Das erste Register, das lokale Register, speichert die aufgetretenen Störungen dieser Instanz für die jeweilige Ausführungsumgebung. In dem zweiten, dem globalen Register, wird eine Art Mittelwert der Störungen aller Instanzen für eine Softwarekomponente abgespeichert. Somit wird das Verhalten der Softwarekomponente in den unterschiedlichen Ausführungsumgebungen erfasst. Jede Instanz der Softwarekomponente bestimmt nun eine Abweichung zwischen seinem Verhalten und dem mittleren Verhalten der anderen Instanzen der Softwarekomponente. Eine große Abweichung des lokalen Störanfälligkeitsregisters zu dem globalen Störanfälligkeitsregister lässt darauf schließen, dass die Softwarekomponente in der jeweiligen Ausführungsumgebung instabil läuft. In diesem Fall sollte von zusätzlichen Änderungen der Ausführungsumgebung oder der Softwarekomponente wenn möglich abgesehen werden. Oder der Administrator muss nach einer Änderung die Softwarekomponente in dieser Ausführungsumgebung sorgfältig überwachen.

Die erfindungsgemäße Vorrichtung für ein Fehlertoleranzmanagement einer Softwarekomponente umfassend einen Programmcode beinhaltet eine Mehrzahl von Datenverarbeitungseinrichtungen zum Ausführen einer Mehrzahl von Instanzen derselben Softwarekomponente in unterschiedlichen Ausführungsumgebungen, in welchen die Instanzen mit unterschiedlichen Softwarekomponenten und/oder unterschiedlicher Hardware interagieren, wobei jede Datenverarbeitungseinrichtung eine erste Speichereinheit zum Speichern eines lokalen Störanfälligkeitsregisters und eine zweite Speichereinheit zum Speichern eines globalen Störanfälligkeitsregisters aufweist;
eine Erfassungseinrichtung zum Erfassen einer Störung einer ersten Instanz der Mehrzahl von Instanzen;
eine Kommunikationsschnittstelle zum Verteilen der erfassten Störung; und
Aktualisierungseinrichtungen zum Aktualisieren der lokalen Störanfälligkeitsregister und der globalen Störanfälligkeitsregister basierend auf der erfassten Störung und eine Fehlertoleranzermittlungseinrichtung zum Ermitteln eines Fehlertoleranzwertes der Softwarekomponente in der jeweiligen Ausführungsumgebung basierend auf einem Unterschied zwischen dem jeweiligen lokalen Störanfälligkeitsregister und dem jeweiligen Störanfälligkeitsregister.

Eine Ausführungsumgebung bezeichnet im Zusammenhang mit der vorliegenden Erfindung die Summe aller Einrichtung, die mit einer Softwarekomponente direkt oder indirekt wechselwirken. Typischerweise umfasst dies sämtliche verwendete Schnittstellen zu Hardware-Einrichtungen, Treiber für diese Schnittstellen, das Betriebssystem, Anwendungen, in denen die Softwarekomponente eingebettet ist, etc.

In den Unteransprüchen und den Ausführungsbeispielen sind Erweiterungen und Ausführungsformen angegeben.

Gemäß einer Ausgestaltung wird die erfasste Störung an eine zentrale Erfassungsstelle übermittelt und die zentrale Erfassungsstelle aktualisiert das globale Störanfälligkeitsregister jeder Instanz der Softwarekomponenten. Die Erfassungsstelle hat hierzu Zugriff auf die globalen Störanfälligkeitsregister. Die Erfassungsstelle kann selbst ein globales Störanfälligkeitsregister beinhalten und dieses anhand der erfassten Störungen aktualisieren. Vorteilhafterweise wird dann dieses aktualisierte globale Störanfälligkeitsregister der zentralen Erfassungsstelle an die Instanzen der Softwarekomponenten verteilt.

In einer Ausgestaltung puffert die zentrale Erfassungsstelle die übermittelte erfasste Störung in einem Puffer und jede Instanz aktualisiert regelmäßig sein globales Störanfälligkeitsregister unter Berücksichtigung der zwischengespeicherten Störung.

In einer Ausgestaltung werden das lokale Störanfälligkeitsregister und das globale Störanfälligkeitsregister unter Verwendung eines statistischen Verfahrens aktualisiert. Das statistische Verfahren kann die Ausführungsdauer einer der Instanzen für das jeweilige lokale Störanfälligkeitsregister berücksichtigen und die aufsummierte Ausführungsdauer aller Instanzen für das globale Störanfälligkeitsregister berücksichtigen.

Die vorliegende Erfindung wird nachfolgend anhand bevorzugter Ausführungsbeispiele und in beigefügten Figuren erläutert.

In den Figuren zeigen:
- Figur 1: ein Blockdiagramm einer Ausführungsform;

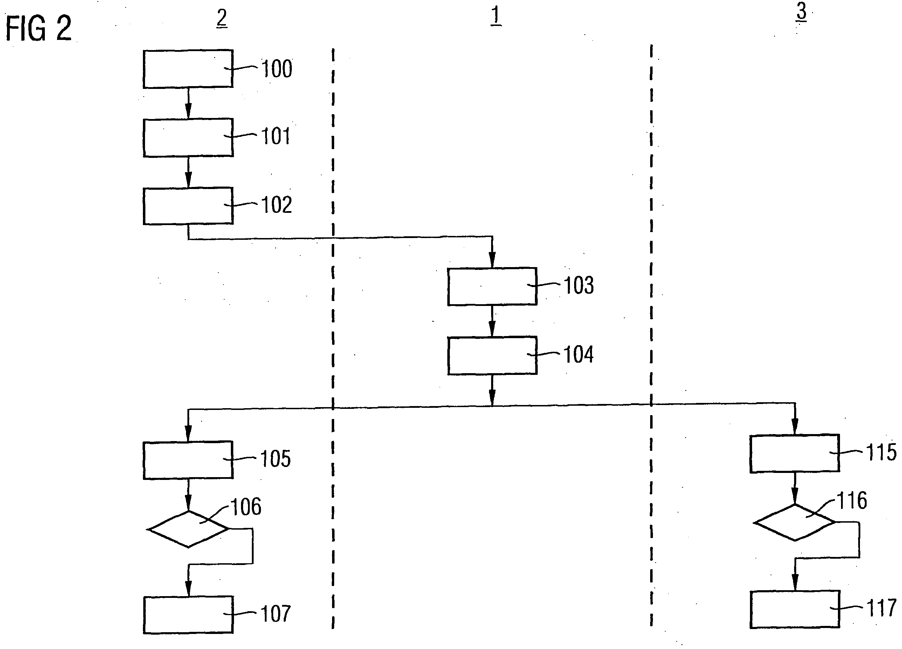

- Figur 2: ein Flussdiagramm eines Verfahrens zu der Ausführungsform in Figur 1;
- Figur 3: ein Blockdiagramm einer zweiten Ausführungsform;
- Figur 4: ein Blockdiagramm eines Fehlertoleranzmanagementsystems.

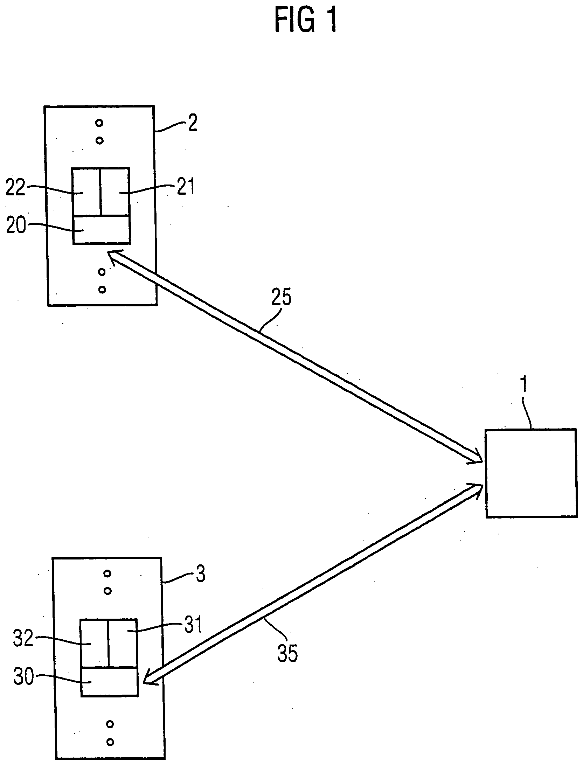

In Figur 1 sind zwei Ausführungsumgebungen 2, 3 exemplarisch für eine Vielzahl von Ausführungsumgebungen dargestellt. In jeder der Ausführungsumgebungen 2, 3 wird ein oder eine Mehrzahl von Prozessen oder Softwarekomponenten ausgeführt. Eine Ausführungsumgebung 2, 3 zeichnet sich durch die Wechselwirkungen der in ihr ausgeführte Softwarekomponente untereinander und mit der verwendeten Hardware ab.

Die Ausführungsumgebung kann eine lokale Einheit bilden, zum Beispiel einen Bürorechner, aber auch ein verteiltes System sein, wie dies zum Beispiel für Internet-basierte Dienste bereitgestellt wird.

Mindestens eine der Softwarekomponenten wird in mehreren Ausführungsumgebungen 2, 3 ausgeführt. Diese ausgeführten identischen Softwarekomponenten werden als Instanzen 20, 30 der Softwarekomponente bezeichnet.

In der Einleitung ist bereits angedeutet, dass für einen Administrator eine wesentliche Problematik in der Betreuung einer solchen Ausführungsumgebung 2, 3 darin besteht, dass er im Vorhinein nicht erkennen kann, ob eine Änderung an der Ausführungsumgebung zu einer Störung der entsprechenden Instanz einer Softwarekomponente führen wird.

Hierzu wird ein so genannter Fehlertoleranzparameter eingeführt werden. Für die Softwarekomponente wird während seiner Entwicklung geschätzt wie hoch eine Fehleranfälligkeit dieser Softwarekomponente ist. Eine solche Schätzung kann auf der Länge des Codes, der Anzahl verwendeter Schnittstellen der Softwarekomponente, etc. erfolgen. Ein solcher Fehlertoleranzparameter kann von dem Hersteller bereitgestellt werden. In gleicher Weise können durch Eingangstests die Softwarekomponenten in verschiedenen standardisierten Ausführungsumgebungen ausgeführt werden und deren Störungen und Fehlverhalten ermittelt werden. Der Einsatz einer Softwarekomponente in einer Ausführungsumgebung erfolgt dann nur, wenn die Kombination der Fehlertoleranzwerte einer Ausführungsumgebung und der Softwarekomponente eine Mindestqualität der Ausführungsqualität der Softwarekomponente erwarten lässt.

In der vorliegenden Ausführungsform werden auch während des Ausführens der Instanzen 20, 30 in der Ausführungsumgebung 2, 3 deren Störungen aktualisiert, um daraus einen dynamischen Fehlertoleranzwert zu ermitteln. Jede der Instanzen 20, 30 erfasst Störungen oder ähnlich geartete Ereignisse, wie zum Beispiel einen Pufferüberlauf, eine unterbrochene Verbindung, einen Paketverlust, einen Anwendungsneustart. Daraufhin aktualisiert die Softwarekomponente 20 ein lokales Störanfälligkeitsregister 21 (Schritt 101).

Die Softwarekomponente und damit auch die Instanz 20 verfügen über eine Schnittstelle oder einen Kanal 25, um mit einer zentralen Erfassungseinrichtung 1 zu kommunizieren. An diese zentrale Erfassungseinrichtung übermittelt er die zuletzt erfasste Störung (Schritt 102). Die zentrale Erfassungseinrichtung 1 bestimmt aus den ihr übermittelten Störungsmeldungen eine globale Häufigkeit der einzelnen Störungen, in wie vielen Instanzen 20, 30 der Softwarekomponente eine solche Störung bereits aufgetreten ist, etc. (Schritt 103). Die zentrale Erfassungseinrichtung übermittelt diesen globalen Wert über die Kanäle 25, 35 an alle Instanzen 20, 30 der Softwarekomponente (Schritt 104).

Jede Instanz 20, 30 weist neben dem lokalen Störanfälligkeitsregister 21, 31 noch ein globales Störanfälligkeitsregister 22, 32 auf. In diesem speichern die Instanzen 20, 30 den an sie übermittelten globalen Wert von der zentralen Erfassungseinrichtung 1 (Schritt 105, 115).

In einem nachfolgenden Schritt vergleichen die Instanzen 20, 30 den Inhalt ihres lokalen und ihres globalen Störanfälligkeitsregisters (Schritt 106, 116). Besteht ein wesentlicher Unterschied zwischen dem lokalen und dem globalen Störanfälligkeitsregister gibt die jeweilige Instanz der Softwarekomponente vorteilhafterweise ein Warnsignal aus, da die Ausführung der Softwarekomponente in der jeweiligen Ausführungsumgebung nicht in dem Maße stabil ist, wie dies für die anderen Softwarekomponenten der Fall ist. Daher sollten Änderungen an dieser Ausführungsumgebung, zum Beispiel durch Updates, nur sehr sorgfältig vorgenommen werden.

Für die Softwarekomponente in der Ausführungsumgebung wird ein neuer Fehlertoleranzwert bestimmt (Schritt 107, 117). Dieser neue Fehlertoleranzwert wird anhand des Unterschieds zwischen dem jeweiligen lokalen Störanfälligkeitsregister 21, 31 und dem jeweiligen globalen Störanfälligkeitsregister 22, 32 ermittelt. Hierbei gilt in der Regel, dass, je größer die Störanfälligkeit der Instanz in der Ausführungsumgebung verglichen zu der Störanfälligkeit der anderen Instanzen dieser Softwarekomponente in den jeweils anderen Ausführungsumgebungen ist, umso geringer ist die Fehlertoleranz. Das heißt, die Softwarekomponente ist in dieser Ausführungsumgebung eher instabil und sollte keinen weiteren Änderungen der Ausführungsumgebung unterworfen werden.

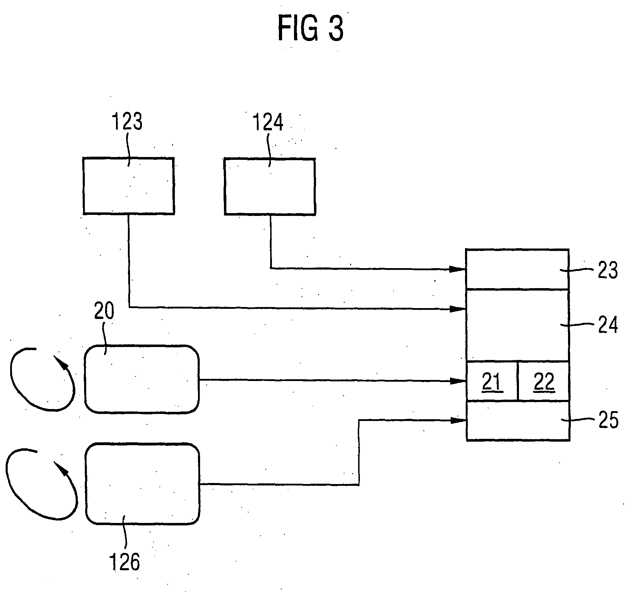

In Figur 3 ist eine Erweiterung des zuvor beschriebenen ersten Ausführungsbeispiels gezeigt. Neben dem zuvor beschriebenen globalen und lokalen Register um das Betriebsverhalten einer Softwarekomponente in einer Ausführungsumgebung zu erfassen, sind weitere Register vorgesehen. In einem Register 26 kann ein Administrator weitere Parameter 126 hinsichtlich des Auftretens von Fehlern hinterlegen. Dies umfasst zum Beispiel die Verfügbarkeitseinschätzungen, die Robustheitseinschätzungen, die Risikoeinschätzungen, spezifisch erfahrene Performance und spezifisch erfahrene Probleme. Diese Parameter 126 können regelmäßig aufgefrischt und an das Register 126 übertragen werden. In gleicher Weise aktualisieren die Softwarekomponenten 20 in regelmäßigen Abständen oder beim Auftreten eines Fehlers das lokale Störanfälligkeitsregister 21. Das globale Störanfälligkeitsregister 22 wird dann entsprechend durch die zentrale Erfassungseinrichtung 1 aktualisiert.

Zusätzlich kann noch ein Register 23, in dem Herstellerspezifische Parameter 123 und/oder ein Register 24, in dem Parameter aus Eingangstests 124 hinterlegt werden, bereitgestellt werden. Vor einem Update oder einer Änderung der Ausführungsumgebung werden alle Parameter in den Registern 21 bis 24 ausgewertet, um zu entscheiden, wie groß das Risiko einer erheblichen Störung der Softwarekomponente bei einer Änderung der Ausführungsumgebung ist.

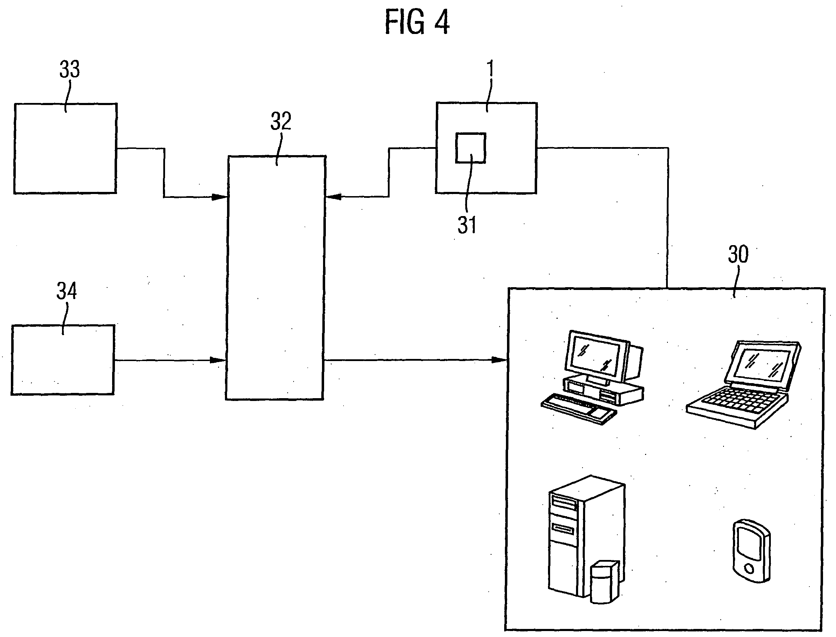

Die Figur 4 illustriert ein Fehlertoleranzmanagementsystem, welches die zuvor beschriebenen Parameter verwendet. Die zentrale Erfassungseinrichtung 1 erfasst die in den Ausführungsumgebungen, zum Beispiel Rechnersystemen 30, auftretenden Störungen. Aus den Parametern schätzt eine zentrale Auswertungseinrichtung 31, ob ein Aktualisieren der Ausführungsumgebungen ohne Auftreten erheblicher Störungen möglich ist. Falls dies bejaht wird, gibt die zentrale Auswertungseinrichtung 31 ein Freigabesignal an eine Aktualisierungseinrichtung 32. Diese kann somit automatisch die Ausführungsumgebungen oder Softwarekomponenten mittels Updates oder Patches aktualisieren. Die Updates oder Patches können von einer Datenbank 33 bereitgestellt werden.

Eine Weiterentwicklung sieht vor, dass die zentrale Auswertungseinrichtung 31 einen Schwellwert basierend auf den einzelnen Fehlertoleranzwerten der Instanzen ermittelt. Dieser Schwellwert wird der Aktualisierungseinrichtung 32 zugeführt. Ferner wird der Aktualisierungseinrichtung ein Schätzwert von der Datenbank für Updates 33 zugeführt. Dieser Schätzwert ist ein Maß für die durch ein Update oder einen Patch vorzunehmenden Änderungen an den Ausführungsumgebungen ist. Dieser Wert kann einerseits durch Eingangstests oder seitens des Herstellers der Updates oder Patches bereitgestellt werden. Bleibt dieser Wert unterhalb des Schwellwertes, so erscheint ein Einspielen des Updates und der Patches, das heißt eine Änderung der Ausführungsumgebungen, als vertretbar und die Änderungen werden ausgeführt. Zudem werden die Parameter berücksichtigt, die seitens des Systemadministrators bereitgestellt werden.

Obwohl die vorliegende Erfindung für ein Fehlertoleranzmanagement einer einzelnen Softwarekomponente beschrieben ist, ist sie nicht darauf beschränkt. Insbesondere erfolgt eine Erweiterung des Fehlertoleranzmanagement auf eine Mehrzahl von Softwarekomponenten durch ein mehrfaches Auslegen der Störanfälligkeitsregister und der weiteren benötigten Einheiten.

## Patentansprüche

1. Verfahren für ein Fehlertoleranzmanagement einer Softwarekomponente umfassend einen Programmcode, mit den Schritten:
(a) Ausführen einer Mehrzahl von Instanzen (20, 30) derselben Softwarekomponente in unterschiedlichen Ausführungsumgebungen (2, 3), in welchen die Instanzen (20, 30) mit unterschiedlichen Softwarekomponenten und/oder unterschiedlicher Hardware interagieren, wobei jeder Instanz ein lokales Störanfälligkeitsregister (21, 31) und ein globales Störanfälligkeitsregister (22, 32) zugeordnet ist;
(b) Erfassen einer Störung einer ersten Instanz (20, 30) der Softwarekomponente;
(c1) Aktualisieren des lokalen Störanfälligkeitsregisters (21, 31) der ersten Instanz (20, 30) basierend auf der erfassten Störung und dem Inhalt des lokalen Störanfälligkeitsregisters (21, 31) der ersten Instanz (20, 30);
(c2) Aktualisieren des globalen Störanfälligkeitsregisters jeder Instanz (20, 30) basierend auf der erfassten Störung und dem Inhalt des globalen Störanfälligkeitsregisters (22, 32) jeder Instanz (20, 30),
(d1) Bestimmen eines Unterschieds des jeweiligen lokalen Störanfälligkeitsregisters (21, 31) zu dem jeweiligen globalen Störanfälligkeitsregister (22, 32); und
(d2) Bestimmen eines Fehlertoleranzwertes für die Softwarekomponente in der jeweiligen Ausführungsumgebung (2, 3) basierend auf dem bestimmten Unterschied.

2. Verfahren nach Anspruch 1,
**dadurch gekennzeichnet,**
**dass** die erfasste Störung an eine zentrale Erfassungsstelle (1) übermittelt wird und die zentrale Erfassungsstelle (1) das globale Störanfälligkeitsregister (22, 32) jeder Instanz (20, 30) der Softwarekomponenten aktualisiert.

3. Verfahren nach Anspruch 1 oder 2,
**dadurch gekennzeichnet,**
**dass** ein zentrales globales Störanfälligkeitsregister (22, 32) bereitgestellt ist, das allen Instanzen zugeordnet ist.

4. Verfahren nach Anspruch 1 oder 2,
**dadurch gekennzeichnet,**
**dass** die erfasste Störung an eine zentrale Erfassungsstelle (1) übermittelt wird, die zentrale Erfassungsstelle (1) die erfasste Störung in einem Puffer zwischenspeichert und jede Instanz (20, 30) regelmäßig sein jeweiliges globales Störanfälligkeitsregister (22, 32) unter Berücksichtigung der zwischengespeicherten Störungen aktualisiert.

5. Verfahren nach wenigstens einem der vorhergehenden Ansprüche,
**dadurch gekennzeichnet,**
**dass** das lokale Störanfälligkeitsregister (21, 31) und das globale Störanfälligkeitsregister (22, 32) unter Verwendung eines statistischen Verfahrens aktualisiert werden.

6. Verfahren nach Anspruch 5,
**dadurch gekennzeichnet,**
**dass** das statistische Verfahren die Ausführungsdauer einer der Instanzen für das jeweilige lokale Störanfälligkeitsregister (21, 31) berücksichtigt und die aufsummierte Ausführungsdauer aller Instanzen für das globale Störanfälligkeitsregister (22, 32) berücksichtigt.

7. Vorrichtung für ein Fehlertoleranzmanagement einer Softwarekomponente umfassend einen Programmcode, mit
einer Mehrzahl von Datenverarbeitungseinrichtungen zum Ausführen einer Mehrzahl von Instanzen (20, 30) derselben Softwarekomponente in unterschiedlichen Ausführungsumgebungen (2, 3), in welchen die Instanzen (20, 30) mit unterschiedlichen Softwarekomponenten und/oder unterschiedlicher Hardware interagieren, wobei die Datenverarbeitungseinrichtungen jeweils eine erste Speichereinheit zum Speichern eines lokalen Störanfälligkeitsregisters und jeweils eine zweite Speichereinheit zum Speichern eines globalen Störanfälligkeitsregisters aufweisen;
einer Erfassungseinrichtung zum Erfassen einer Störung einer ersten Instanz der Mehrzahl von Instanzen;
eine Kommunikationsschnittstelle zum Verteilen der erfassten Störung;
Aktualisierungseinrichtungen zum Aktualisieren der lokalen Störanfälligkeitsregister und der globalen Störanfälligkeitsregister basierend auf der erfassten Störung; und
eine Fehlertoleranzermittelungseinrichtung zum Bestimmen eines Fehlertoleranzwertes für die Softwarekomponente in der jeweiligen Ausführungsumgebung basierend auf dem Unterschied des jeweiligen lokalen Störanfälligkeitsregisters und des globalen Störanfälligkeitsregisters.

## Claims

1. Method for fault-tolerance management of a software component including a program code, comprising the steps of:
(a) executing a plurality of instances (20, 30) of the same software component in different execution environments (2, 3), in which the instances (20, 30) interact with different software components and/or different hardware, wherein a local error susceptibility register (21, 31) and a global error susceptibility register (22, 32) are assigned to each instance;
(b) detecting an error of a first instance (20, 30) of the software component;
(c1) updating the local error susceptibility register (21, 31) of the first instance (20, 30) based on the detected error and the content of the local error susceptibility register (21, 31) of the first instance (20, 30);
(c2) updating the global error susceptibility register of each instance (20, 30) based on the detected error and the content of the global error susceptibility register (22, 32) of each instance (20, 30),
(d1) determining a difference between the respective local error susceptibility register (21, 31) and the respective global error susceptibility register (22, 32); and
(d2) determining a fault-tolerance value for the software component in the respective execution environment (2, 3) based on the determined difference.

2. Method according to claim 1,
**characterized in that**
the detected error is transmitted to a central detection station (1) and the central detection station (1) updates
the global error susceptibility register (22, 32) of each instance (20, 30) of the software components.

3. Method according to claims 1 or 2,
**characterized in that**
a central global error susceptibility register (22, 32) is provided, which is assigned to all instances.

4. Method according to claims 1 or 2,
**characterized in that**
the detected error is transmitted to a central detection station (1), the central detection station (1) temporarily stores the detected error in a buffer and each instance (20, 30) regularly updates its respective global error susceptibility register (22, 32) in consideration of the temporarily stored errors.

5. Method according to at least one of the preceding claims,
**characterized in that**
the local error susceptibility register (21, 31) and the global error susceptibility register (22, 32) are updated using a statistical method.

6. Method according to claim 5,
**characterized in that**
the statistical method takes into account the execution time of one of the instances for the respective local error susceptibility register (21, 31) as well as the sum of the execution times of all instances for the global error susceptibility register (22, 32).

7. Device for fault-tolerance management of a software component including a program code, comprising:
a plurality of data processing devices for executing a plurality of instances (20, 30) of the same software component in different execution environments (2, 3), in which the instances (20, 30) interact with different software components and/or different hardware, wherein the data processing devices respectively comprise a first storage unit for storing a local error susceptibility register and a second storage unit for storing a global error susceptibility register;
a detection device for detecting an error of a first instance of the plurality of instances;
a communication interface for distributing the detected error;
updating devices for updating the local error susceptibility registers and the global error susceptibility registers based on the detected error; and
a fault-tolerance averaging device for determining a fault-tolerance value for the software component in the respective execution environment based on the difference between the respective local error susceptibility register and the global error susceptibility register.

## Revendications

1. Procédé pour une gestion de tolérance aux défauts d'un composant logiciel comprenant un code de programmation, comportant les étapes :
(a) exécution d'une pluralité d'instances (20, 30) du même composant logiciel dans différents environnements d'exécution (2, 3) dans lesquels les instances (20, 30) interagissent avec différents composants logiciels et/ou différents matériels, un registre local de sensibilité aux défauts (21, 31) et un registre global de sensibilité aux défauts (22, 32) étant associés à chaque instance ;
(b) détection d'un défaut d'une première instance (20, 30) du composant logiciel ;
(c1) mise à jour du registre local de sensibilité aux défauts (21, 31) de la première instance (20,30) sur la base du défaut détecté et du contenu du registre local de sensibilité aux défauts (21, 31) de la première instance (20, 30) ;
(c2) mise à jour du registre global de sensibilité aux défauts de chaque instance (20, 30) sur la base du défaut détecté et du contenu du registre global de sensibilité aux défauts (22, 32) de chaque instance (20, 30) ;
(d1) détermination d'une différence du registre local respectif de sensibilité aux défauts (21, 31) par rapport au registre global respectif de sensibilité aux défauts (22, 32) ; et
(d2) détermination d'une valeur de tolérance aux défauts pour le composant logiciel dans l'environnement d'exécution respectif (2, 3) sur la base de la différence déterminée.

2. Procédé selon la revendication 1,
**caractérisé en ce que**
le défaut détecté est transmis à un poste de détection centralisé (1) et **en ce que** le poste de détection centralisé (1) met à jour le registre global de sensibilité aux défauts (22, 32) de chaque instance (20, 30) des composants logiciels.

3. Procédé selon la revendication 1 ou 2,
**caractérisé en ce**
**qu'**un registre central global de sensibilité aux défauts (22, 32) est mis à disposition, lequel est attribué à toutes les instances.

4. Procédé selon la revendication 1 ou 2,
**caractérisé en ce**
**que** le défaut détecté est transmis à un poste de détection centralisé (1), **en ce que** le poste de détection centralisé (1) mémorise temporairement dans une mémoire tampon le défaut détecté et **en ce que** chaque instance (20, 30) met à jour régulièrement son registre global respectif de sensibilité aux défauts (22, 32) en tenant compte des défauts temporairement mémorisés.

5. Procédé selon au moins l'une quelconque des revendications précédentes,
**caractérisé en ce**
**que** le registre local de sensibilité aux défauts (21, 31) et le registre global de sensibilité aux défauts (22, 32) sont mis à jour par application d'un procédé statistique.

6. Procédé selon la revendication 5,
**caractérisé en ce**
**que** le procédé statistique considère la durée d'exécution de l'une des instances pour le registre local respectif de sensibilité aux défauts (21, 31) et considère la durée d'exécution totalisée de toutes les instances pour le registre global de sensibilité aux défauts (22, 32).

7. Dispositif pour une gestion de tolérance aux défauts d'un composant logiciel comprenant un code de programmation, comportant
une pluralité de dispositifs de traitement de données destinés à l'exécution d'une pluralité d'instances (20, 30) du même composant logiciel dans différents environnements d'exécution (2, 3) dans lesquels les instances (20, 30) interagissent avec différents composants logiciels et/ou différents matériels, les dispositifs de traitement de données présentant respectivement une première unité de mémorisation destinée à mémoriser un registre local de sensibilité aux défauts et respectivement une deuxième unité de mémorisation destinée à mémoriser un registre global de sensibilité aux défauts ;
un dispositif de détection destiné à détecter un défaut d'une première instance de la pluralité d'instances ;
une interface de communication destinée à distribuer le défaut détecté ;
des dispositifs de mise à jour destinés à la mise à jour des registres locaux de sensibilité aux défauts et des registres globaux de sensibilité aux défauts sur la base du défaut détecté ; et
un dispositif de détermination de tolérance aux défauts destiné à déterminer une valeur de tolérance aux défauts pour le composant logiciel dans l'environnement d'exécution respectif sur la base de la différence du registre local respectif de sensibilité aux défauts et du registre global respectif de sensibilité aux défauts.
